(19)

Europäisches
Patentamt
European
Patent Office
Office européen
des brevets

(11) **EP 4 148 389 A2**

(12) **EUROPEAN PATENT APPLICATION**

(43) Date of publication:
**15.03.2023 Bulletin 2023/11**

(21) Application number: **22189209.4**

(22) Date of filing: **08.08.2022**

(51) International Patent Classification (IPC):
**G01C 21/32** (2006.01)  **G01C 21/00** (2006.01)
**G05D 1/00** (2006.01)

(52) Cooperative Patent Classification (CPC):
**G01C 21/3841; G01C 21/32; G05D 1/0088**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.08.2021 US 202117444861**

(71) Applicant: **HERE Global B.V.
5611 ZT Eindhoven (NL)**

(72) Inventor: **Keski-Valkama,, Tero Juhani
8954 Zurich (CH)**

(74) Representative: **Potter Clarkson
Chapel Quarter
Chapel Bar
Nottingham NG1 6HQ (GB)**

(54) **METHOD AND APPARATUS FOR GENERATING MAPS FROM GEOSPATIAL OBSERVATIONS**

(57)  A method, apparatus and computer program product are provided for learning to generate maps from raw geospatial observations from sensors traveling within an environment. Methods may include: receiving a plurality of sequences of geospatial observations from discrete trajectories; aligning the trajectories to generate aligned geospatial observations; concatenating the aligned geospatial observations; processing the concatenated, aligned geospatial observations using one or more Set Transformers; generating, from the at least one Set Transformer, map geometries including objects from the geospatial observations; and providing at least one of navigational assistance or at least semi-autonomous vehicle control based on the map geometries. According to some embodiments, aligning the trajectories includes applying a geospatial offset for one or more of the trajectories.

FIG. 7

**Description**

TECHNOLOGICAL FIELD

Example embodiments of the present invention relate generally to the automatic generation of maps, and more particularly, to a system for learning to generate maps from raw geospatial observations from sensors traveling within an environment.

BACKGROUND

Road geometry modelling is very useful for high-definition (HD) map creation and terrain identification along with feature and obstacle detection in environments, each of which may facilitate autonomous vehicle navigation along a prescribed path. Traditional methods for 3D modelling of road geometry and object or feature detection are resource intensive, often requiring significant amounts of human measurement and calculation. Such methods are thus time consuming and costly. Exacerbating this issue is the fact that many modern-day applications (e.g., 3D mapping, terrain identification, or the like) require manual or semi-automated analysis of large amounts of data, and therefore are not practical without quicker or less costly techniques.

Some current methods rely upon feature detection from image data to perform road terrain detection or environment feature detection, but these methods have deficiencies. For instance, some systems designed for terrain and feature detection around a vehicle exist but may be unreliable. Further, the reliability of feature detection may not be known such that erroneous feature detection or lack of feature detection may adversely impact autonomous or semi-autonomous driving. Over-estimating the accuracy of feature detection may cause safety concerns as object locations may be improperly interpreted as accurate when they are actually inaccurate, while under-estimating accuracy may lead to inefficiencies through overly cautious behaviors. Further, map data reconstruction of an environment may be inaccurate if object identification does not properly establish the location of an object in three-dimensional space due to inaccuracy during the detection stage.

BRIEF SUMMARY

Accordingly, a method, apparatus, and computer program product are provided for automatic generation of maps, and more particularly, to a system for learning to generate maps from raw geospatial observations from sensors traveling within an environment. In a first example embodiment, an apparatus is provided including at least one processor and at least one memory including computer program code, the at least one memory and the computer program code may be configured to, with the at least one processor, cause the apparatus to: receive a plurality of sequences of geospatial observations from discrete trajectories; align the trajectories to generate aligned geospatial observations; concatenate the aligned geospatial observations; process the concatenated, aligned geospatial observations using one or more Set Transformers; generate, from the at least one Set Transformer, map geometries including objects from the geospatial observations; and provide for at least one of navigational assistance or at least semi-autonomous vehicle control based on the map geometries.

According to some embodiments, causing the apparatus to align the trajectories includes causing the apparatus to apply a geospatial offset for one or more of the trajectories. Causing the apparatus of some embodiments to align the trajectories includes causing the apparatus to apply a multi-head self-attentional layer with a distance kernel defined as a Euclidean distance to the trajectories to generate offsets for the trajectories in order to align the trajectories. The plurality of sequences of geospatial observations from discrete trajectories include, in some embodiments, unique trajectory identifiers for each trajectory, where causing the apparatus to concatenate the aligned geospatial observations includes causing the apparatus to remove the unique trajectory identifiers associated with the geospatial observations.

According to some embodiments, causing the apparatus to align the trajectories to generate aligned geospatial observations includes causing the apparatus to: apply a machine learning model to the geospatial observations of the sequences of geospatial observations for the discrete trajectories; determine, from the machine learning model, a displacement for each of the geospatial observations; average, for each discrete trajectory, the displacement for each of the geospatial observations in the respective discrete trajectory to generate an average displacement for each discrete trajectory; and apply the average displacement for each discrete trajectory to the respective discrete trajectory to align the discrete trajectories.

According to some embodiments, the objects from the geospatial observations included in the map geometries include point objects and linear objects, where point objects include signs and poles, and where linear objects include road markings and road boundaries. The objects from the geospatial observations are used, in some embodiments, to facilitate autonomous vehicle control. According to some embodiments, the map geometries including objects from the geospatial observations are model outputs, where the apparatus is further caused to compute a loss for the model outputs for backpropagation-based model parameter training using a Chamfer loss function. The apparatus of some embodiments is further caused to remove duplicate output objects using clustering or domain-specific heuristics.

Embodiments provided herein include a computer program product including at least one non-transitory computer-readable storage medium having computer-executable program code instructions stored therein, the computer-executable program code instructions including program code instructions to: receive a plurality of sequences of geospatial observations from discrete trajectories; align the trajectories to generate aligned geospatial observations; concatenate the aligned geospatial observations; process the concatenated, aligned geospatial observations using one or more Set Transformers; generate, from the at least one Set Transformer, map geometries including objects from the geospatial observations; and provide for at least one of navigational assistance or at least semi-autonomous vehicle control based on the map geometries.

The program code instructions to align the trajectories include, in some embodiments, program code instructions to apply a geospatial offset for one or more of the trajectories. The program code instructions to align the trajectories include, in some embodiments, program code instructions to apply a multi-head self-attentional layer with a distance kernel defined as a Euclidean distance to the trajectories to generate offsets for the trajectories in order to align the trajectories. According to some embodiments, the plurality of sequences of geospatial observations from discrete trajectories include unique trajectory identifiers for each trajectory, where the program code instructions to concatenate the aligned geospatial observations includes, in some embodiments, program code instructions to remove the unique trajectory identifiers associated with the geospatial observations.

The program code instructions to align the trajectories to generate aligned geospatial observations include, in some embodiments, program code instructions to: apply a machine learning model to the geospatial observations of the sequences of geospatial observations for the discrete trajectories; determine, from the machine learning model, a displacement for each of the geospatial observations; average, for each discrete trajectory, the displacement for each of the geospatial observations in the respective discrete trajectory to generate an average displacement for each trajectory; and apply the average displacement for each discrete trajectory to the respective discrete trajectory to align the discrete trajectories.

The objects from the geospatial observations included in the map geometries include, in some embodiments, point objects and linear objects, where point objects include signs and poles, and where linear objects include road markings and boundaries. The objects from the geospatial observations are used, in some embodiments, to facilitate autonomous vehicle control. The map geometries including objects from the geospatial observations are, in some embodiments, model outputs, where the computer program product further includes program code instructions to compute a loss for the model outputs for backpropagation-based model parameter training using a Chamfer loss function. According to some embodiments, the computer program product includes program code instructions to remove duplicate output objects using clustering or domain-specific heuristics.

Embodiments provided herein include a method including: receiving a plurality of sequences of geospatial observations from discrete trajectories; aligning the trajectories to generate aligned geospatial observations; concatenating the aligned geospatial observations; processing the concatenated, aligned geospatial observations using one or more Set Transformers; generating, from the at least one Set Transformer, map geometries including objects from the geospatial observations; and providing at least one of navigational assistance or at least semi-autonomous vehicle control based on the map geometries. According to some embodiments, aligning the trajectories includes applying a geospatial offset for one or more of the trajectories.

Embodiments provided herein include an apparatus including: means for receiving a plurality of sequences of geospatial observations from discrete trajectories; means for aligning the trajectories to generate aligned geospatial observations; means for concatenating the aligned geospatial observations; means for processing the concatenated, aligned geospatial observations using one or more Set Transformers; means for generating, from the at least one Set Transformer, map geometries including objects from the geospatial observations; and means for providing at least one of navigational assistance or at least semi-autonomous vehicle control based on the map geometries. According to some embodiments, the means for aligning the trajectories includes means for applying a geospatial offset for one or more of the trajectories. The following numbered paragraphs are also disclosed:

1. An apparatus comprising at least one processor and at least one non-transitory memory including computer program code instructions, the computer program code instructions configured to, when executed, cause the apparatus to at least:

receive a plurality of sequences of geospatial observations from discrete trajectories;
align the trajectories to generate aligned geospatial observations;
concatenate the aligned geospatial observations;
process the concatenated, aligned geospatial observations using one or more Set Transformers;
generate, from the at least one Set Transformer, map geometries including objects from the geospatial observations; and
provide for at least one of navigational assistance or at least semi-autonomous vehicle control based on the map geometries.

2. The apparatus of paragraph 1, wherein causing the apparatus to align the trajectories comprises causing the apparatus to apply a geospatial offset for one or more of the trajectories.

3. The apparatus of paragraph 1, wherein causing the apparatus to align the trajectories comprises causing the apparatus to apply a multi-head self-attentional layer with a distance kernel defined as a Euclidean distance to the trajectories to generate offsets for the trajectories in order to align the trajectories.

4. The apparatus of paragraph 1, wherein the plurality of sequences of geospatial observations from discrete trajectories include unique trajectory identifiers for each trajectory, wherein causing the apparatus to concatenate the aligned geospatial observations comprises causing the apparatus to remove the unique trajectory identifiers associated with the geospatial observations.

5. The apparatus of paragraph 1, wherein causing the apparatus to align the trajectories to generate aligned geospatial observations comprises causing the apparatus to:

apply a machine learning model to the geospatial observations of the sequences of geospatial observations for the discrete trajectories;
determine, from the machine learning model, a displacement for each of the geospatial observations;
average, for each discrete trajectory, the displacement for each of the geospatial observations in the respective discrete trajectory to generate an average displacement for each discrete trajectory; and
apply the average displacement for each discrete trajectory to the respective discrete trajectory to align the discrete trajectories.

6. The apparatus of paragraph 1, wherein the objects from the geospatial observations included in the map geometries comprise point objects and linear objects, wherein point objects comprise signs and poles, and wherein linear objects comprise road markings and road boundaries.

7. The apparatus of paragraph 6, wherein the objects from the geospatial observations are used to facilitate autonomous vehicle control.

8. The apparatus of paragraph 1, wherein the map geometries including objects from the geospatial observations are model outputs, wherein the apparatus is further caused to compute a loss for the model outputs for backpropagation-based model parameter training using a Chamfer loss function.

9. The apparatus of paragraph 8, wherein the apparatus is further caused to remove duplicate output objects using clustering or domain-specific heuristics.

10. A computer program product comprising at least one non-transitory computer-readable storage medium having computer-executable program code instructions stored therein, the computer-executable program code instructions comprising program code instructions to:

receive a plurality of sequences of geospatial observations from discrete trajectories;
align the trajectories to generate aligned geospatial observations;
concatenate the aligned geospatial observations;
process the concatenated, aligned geospatial observations using one or more Set Transformers;
generate, from the at least one Set Transformer, map geometries including objects from the geospatial observations; and
provide for at least one of navigational assistance or at least semi-autonomous vehicle control based on the map geometries.

11. The computer program product of paragraph 10, wherein the program code instructions to align the trajectories comprise program code instructions to apply a geospatial offset for one or more of the trajectories.

12. The computer program product of paragraph 10, wherein the program code instructions to align the trajectories comprise program code instructions to apply a multi-head self-attentional layer with a distance kernel defined as a Euclidean distance to the trajectories to generate offsets for the trajectories in order to align the trajectories.

13. The computer program product of paragraph 10, wherein the plurality of sequences of geospatial observations from discrete trajectories include unique trajectory identifiers for each trajectory, wherein the program code instructions to concatenate the aligned geospatial observations comprise program code instructions to remove the unique trajectory identifiers associated with the geospatial observations.

14. The computer program product of claim 10, wherein the program code instructions to align the trajectories to generate aligned geospatial observations comprise program code instructions to:

apply a machine learning model to the geospatial observations of the sequences of geospatial observations for the discrete trajectories;

determine, from the machine learning model, a displacement for each of the geospatial observations;

average, for each discrete trajectory, the displacement for each of the geospatial observations in the respective discrete trajectory to generate an average displacement for each discrete trajectory; and

apply the average displacement for each discrete trajectory to the respective discrete trajectory to align the discrete trajectories.

15. The computer program product of paragraph 10, wherein the objects from the geospatial observations included in the map geometries comprise point objects and linear objects, wherein point objects comprise signs and poles, and wherein linear objects comprise road markings and road boundaries.

16. The computer program product of paragraph 15, wherein the objects from the geospatial observations are used to facilitate autonomous vehicle control.

17. The computer program product of paragraph 10, wherein the map geometries including objects from the geospatial observations are model outputs, wherein the computer program product further includes program code instructions to compute a loss for the model outputs for backpropagation-based model parameter training using a Chamfer loss function.

18. The computer program product of paragraph 17, further comprising program code instructions to remove duplicate output objects using clustering or domain-specific heuristics.

19. A method comprising:

receiving a plurality of sequences of geospatial observations from discrete trajectories;

aligning the trajectories to generate aligned geospatial observations;

concatenating the aligned geospatial observations;

processing the concatenated, aligned geospatial observations using one or more Set Transformers;

generating, from the at least one Set Transformer, map geometries including objects from the geospatial observations; and

providing for at least one of navigational assistance or at least semi-autonomous vehicle control based on the map geometries.

20. The method of paragraph 1, wherein aligning the trajectories comprises applying a geospatial offset for one or more of the trajectories.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

BRIEF DESCRIPTION OF THE DRAWINGS

Having thus described certain example embodiments of the present invention in general terms, reference will hereinafter be made to the accompanying drawings which are not necessarily drawn to scale, and wherein:

Figure 1 is a block diagram of an apparatus according to an example embodiment of the present disclosure;

Figure 2 is a block diagram of a system for iteratively establishing the position of a detected object according to an example embodiment of the present disclosure;

Figure 3 illustrates the use of aggregated drives in map creation, verification, and healing according to an example embodiment of the present disclosure;

Figure 4 is a flowchart of input head drive alignment according to an example embodiment of the present disclosure;

Figure 5 is a flowchart of the operations of a drive conflation network according to an example embodiment of the present disclosure;

Figure 6 is a block diagram of a system for implementing the methods described herein for learning to generate maps from raw geospatial observations from sensors traveling within an environment according to an example embodiment of the present disclosure; and

Figure 7 is a flowchart of operations for learning to generate maps from raw geospatial observations from sensors traveling within an environment according to an example embodiment of the present disclosure.

DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

A method, apparatus and computer program product are provided in accordance with an example embodiment of the present invention for the automatic generation of maps, and more particularly, to a system for learning to generate maps from raw geospatial observations from sensors traveling within an environment. Autonomous vehicles leverage sensor information relating to roads and objects and features proximate the roads to determine safe regions of a road to drive and to evaluate their surroundings as they traverse a road segment. Further, autonomous and semi-autonomous vehicles use high-definition map information to facilitate autonomous driving and to plan autonomous driving routes. These high-definition maps or HD maps are specifically designed and configured to facilitate autonomous and semi-autonomous vehicle control and may be able to replicate road segments virtually with the inclusion of accurately placed signs and other features or objects proximate a roadway.

HD maps have a high precision at resolutions that may be down to several centimeters that identify objects proximate a road segment, such as features of a road segment including lane widths, lane markings, traffic direction, speed limits, lane restrictions, etc. Autonomous and semi-autonomous vehicles use these HD maps to facilitate the autonomous control features, such as traveling within a lane of a road segment at a prescribed speed limit. Autonomous vehicles may also be equipped with a plurality of sensors to facilitate autonomous vehicle control. Sensors may include image sensors/cameras, Light Distancing and Ranging (LiDAR), Global Navigation Satellite Systems (GNSS) such as Global Positioning Systems (GPS), Galileo etc., Inertial Measurement Units (IMUs), or the like which may measure the surroundings of a vehicle and communicate information regarding the surroundings to a vehicle control module to process and adapt vehicle control accordingly.

HD maps may be generated and updated based on sensor data from sensor-equipped vehicles traveling along road segments of a road network. These vehicles may have various degrees of autonomy and may be equipped with a variety of different levels of sensors. Sensors from fully autonomous vehicles, for example, may be used to update map data or generate new map data in a form of crowd-sourced data from vehicles traveling along road segments. Sensor data received can be aggregated with other sensor data relating to the data captured by sensors to establish the accuracy of sensor data and to confirm the position, size, shape, etc. of features and objects along the road segment.

Embodiments described herein may broadly relate to computer vision when there is a need to establish the position of objects and features within an environment. For example, objects and features along a road segment may be detected through processing of sensor data. As the sensor data may be generated from a vehicle traveling along the road segment, the sensor data may not include object information from a perspective other than from along the road segment. As such, the degree to which sensor data may be relied upon for accurate positioning estimation of the object within three-dimensional space may be limited due to parallax effects between the relative sensor positions. Embodiments described herein provide a method of learning to generate maps (including map features and objects) from raw geospatial observations across multiple passes or drives from one or more sensor-equipped vehicles.

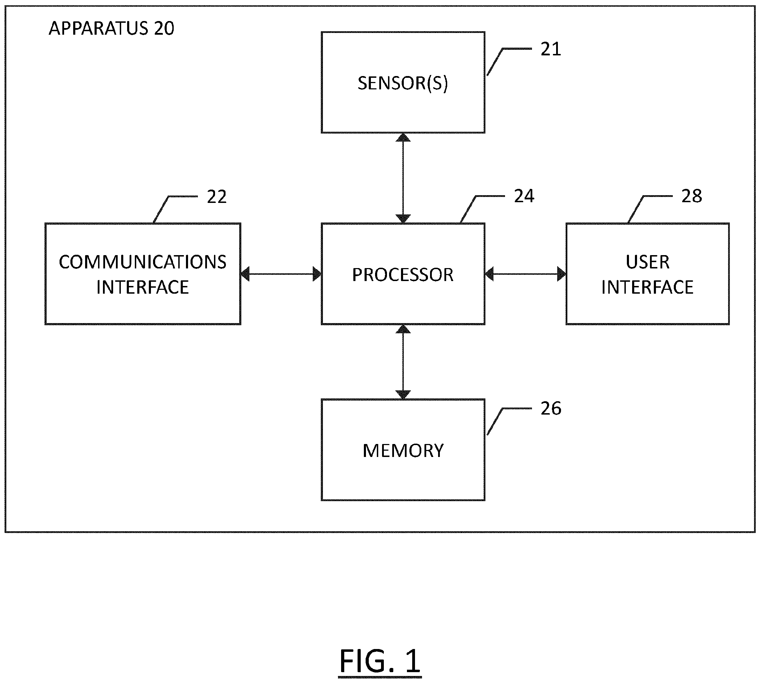

Figure 1 is a schematic diagram of an example apparatus configured for performing any of the operations described herein. Apparatus 20 is an example embodiment that may be embodied by or associated with any of a variety of computing devices that include or are otherwise associated with a device configured for providing advanced driver assistance features which may include a navigation system user interface. For example, the computing device may be an Advanced Driver Assistance System module (ADAS) which may at least partially control autonomous or semi-autonomous features of a vehicle. However, as embodiments described herein may optionally be used for map generation, map updating, and map accuracy confirmation, embodiments of the apparatus may be embodied or partially embodied as a mobile terminal, such as a personal digital assistant (PDA), mobile telephone, smart phone, personal navigation device, smart watch, tablet computer, camera or any combination of the aforementioned and other types of voice and text communications systems. In a preferred embodiment where some level of vehicle autonomy is involved, the apparatus 20 is embodied or partially embodied by an electronic control unit of a vehicle that supports safety-critical systems such as the powertrain (engine, transmission, electric drive motors, etc.), steering (e.g., steering assist or steer-by-wire), and braking (e.g., brake assist or brake-by-wire). Optionally, the computing device may be a fixed computing device, such as a built-in vehicular navigation device, assisted driving device, or the like.

Optionally, the apparatus may be embodied by or associated with a plurality of computing devices that are in communication with or otherwise networked with one another such that the various functions performed by the apparatus may be divided between the plurality of computing devices that operate in collaboration with one another.

The apparatus 20 may be equipped or associated, e.g., in communication, with any number of sensors 21, such as a global positioning system (GPS), accelerometer, an image sensor, LiDAR, radar, and/or gyroscope. Any of the sensors may be used to sense information regarding the movement, positioning, or orientation of the device for use in navigation assistance, as described herein according to example embodiments. In some example embodiments, such sensors may be implemented in a vehicle or other remote apparatus, and the information detected may be transmitted to the apparatus 20, such as by near field communication (NFC) including, but not limited to, Bluetooth™ communication, or the like.

The apparatus 20 may include, be associated with, or may otherwise be in communication with a communication interface 22, a processor 24, a memory device 26 and a user interface 28. In some embodiments, the processor (and/or co-processors or any other processing circuitry assisting or otherwise associated with the processor) may be in communication with the memory device via a bus for passing information among components of the apparatus. The memory device may be non-transitory and may include, for example, one or more volatile and/or non-volatile memories. In other words, for example, the memory device may be an electronic storage device (for example, a computer readable storage medium) comprising gates configured to store data (for example, bits) that may be retrievable by a machine (for example, a computing device like the processor). The memory device may be configured to store information, data, content, applications, instructions, or the like for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

The processor 24 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 24 may be configured to execute instructions stored in the memory device 26 or otherwise accessible to the processor. Alternatively or additionally, the processor may be configured to execute hard coded functionality. As such, whether configured by hardware or software methods, or by a combination thereof, the processor may represent an entity (for example, physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device (for example, the computing device) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

The apparatus 20 of an example embodiment may also include or otherwise be in communication with a user interface 28. The user interface may include a touch screen display, a speaker, physical buttons, and/or other input/output mechanisms. In an example embodiment, the processor 24 may comprise user interface circuitry configured to control at least some functions of one or more input/output mechanisms. The processor and/or user interface circuitry comprising the processor may be configured to control one or more functions of one or more input/output mechanisms through computer program instructions (for example, software and/or firmware) stored on a memory accessible to the processor (for example, memory device 24, and/or the like).

The apparatus 20 of an example embodiment may also optionally include a communication interface 22 that may be any means such as a device or circuitry embodied in either hardware or a combination of hardware and software that is configured to receive and/or transmit data from/to other electronic devices in communication with the apparatus, such as by NFC, described above. Additionally or alternatively, the communication interface 22 may be configured to communicate over Global System for Mobile Communications (GSM), such as but not limited to Long Term Evolution (LTE). In this regard, the communication interface 22 may include, for example, an antenna (or multiple antennas) and supporting hardware and/or software for enabling communications with a wireless communication network. Additionally or alternatively, the communication interface 22 may include the circuitry for interacting with the antenna(s) to cause transmission of signals via the antenna(s) or to handle receipt of signals received via the antenna(s). In some environments, the communication interface 22 may alternatively or also support wired communication and/or may alternatively support vehicle to vehicle or vehicle to infrastructure wireless links.

The apparatus 20 may support a mapping or navigation application so as to present maps or otherwise provide navigation or driver assistance. For example, the apparatus 20 may provide for display of a map and/or instructions for following a route within a network of roads via user interface 28. In order to support a mapping application, the computing device may include or otherwise be in communication with a geographic database, such as may be stored in memory 26. For example, the geographic database includes node data records, road segment or link data records, point of interest (POI) data records, and other data records. More, fewer or different data records can be provided. In one embodiment, the other data records include cartographic data records, routing data, and maneuver data. One or more portions, components, areas, layers, features, text, and/or symbols of the POI or event data can be stored in, linked to, and/or associated with one or more of these data records. For example, one or more portions of the POI, event data, or recorded route information can be matched with respective map or geographic records via position or GPS data associations (such as using known or future map matching or geo-coding techniques), for example. Furthermore, other positioning technology may be used, such as electronic horizon sensors, radar, LiDAR, ultrasonic and/or infrared sensors.

In example embodiments, a navigation system user interface may be provided to provide driver assistance to a user traveling along a network of roadways. Optionally, embodiments described herein may provide assistance for autonomous or semi-autonomous vehicle control. Autonomous vehicle control may include driverless vehicle capability where all vehicle functions are provided by software and hardware to safely drive the vehicle along a path identified by the vehicle. Semi-autonomous vehicle control may be any level of driver assistance from adaptive cruise control, to lane-keep assist, or the like. Identifying objects along road segments or road links that a vehicle may traverse may provide information useful to navigation and autonomous or semi-autonomous vehicle control by establishing barriers defining roadway width, identifying roadway curvature, or any boundary related details of the road links that may be traversed by the vehicle.

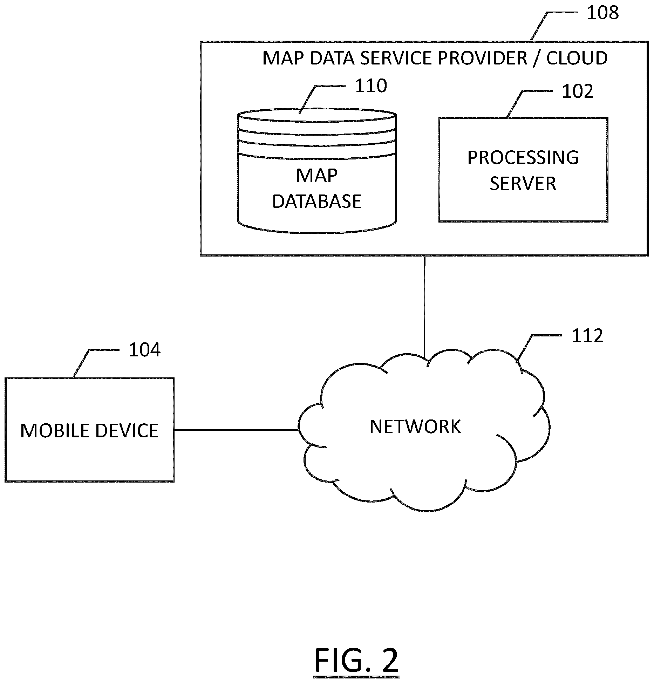

A map service provider database may be used to provide driver assistance via a navigation system and/or through an ADAS having autonomous or semi-autonomous vehicle control features. Figure 2 illustrates a communication diagram of an example embodiment of a system for implementing example embodiments described herein. The illustrated embodiment of Figure 2 includes a mobile device 104, which may be, for example, the apparatus 20 of Figure 2, such as a mobile phone, an in-vehicle navigation system, an ADAS, or the like, and a map data service provider or cloud service 108. Each of the mobile device 104 and map data service provider 108 may be in communication with at least one of the other elements illustrated in Figure 2 via a network 112, which may be any form of wireless or partially wireless network as will be described further below. Additional, different, or fewer components may be provided. For example, many mobile devices 104 may connect with the network 112. The map data service provider 108 may be cloud-based services and/or may operate via a hosting server that receives, processes, and provides data to other elements of the system.

The map data service provider may include a map database 110 that may include node data, road segment data or link data, point of interest (POI) data, traffic data or the like. The map database 110 may also include cartographic data, routing data, and/or maneuvering data. According to some example embodiments, the road segment data records may be links or segments representing roads, streets, or paths, as may be used in calculating a route or recorded route information for determination of one or more personalized routes. The node data may be end points corresponding to the respective links or segments of road segment data. The road link data and the node data may represent a road network, such as used by vehicles, cars, trucks, buses, motorcycles, and/or other entities. Optionally, the map database 110 may contain path segment and node data records or other data that may represent pedestrian paths or areas in addition to or instead of the vehicle road record data, for example. The road/link segments and nodes can be associated with attributes, such as geographic coordinates, street names, address ranges, speed limits, turn restrictions at intersections, and other navigation related attributes, as well as POIs, such as fueling stations, hotels, restaurants, museums, stadiums, offices, auto repair shops, buildings, stores, parks, etc. The map database 110 can include data about the POIs and their respective locations in the POI records. The map database 110 may include data about places, such as cities, towns, or other communities, and other geographic features such as bodies of water, mountain ranges, etc. Such place or feature data can be part of the POI data or can be associated with POIs or POI data records (such as a data point used for displaying or representing a position of a city). In addition, the map database 110 can include event data (e.g., traffic incidents, construction activities, scheduled events, unscheduled events, etc.) associated with the POI data records or other records of the map database 110.

The map database 110 may be maintained by a content provider e.g., the map data service provider and may be accessed, for example, by the content or service provider processing server 102. By way of example, the map data service provider can collect geographic data and dynamic data to generate and enhance the map database 110 and dynamic data such as traffic-related data contained therein. There can be different ways used by the map developer to collect data. These ways can include obtaining data from other sources, such as municipalities or respective geographic authorities, such as via global information system databases. In addition, the map developer can employ field personnel to travel by vehicle along roads throughout the geographic region to observe features and/or record information about them, for example. Also, remote sensing, such as aerial or satellite photography and/or LiDAR, can be used to generate map geometries directly or through machine learning as described herein. However, the most ubiquitous form of data that may be available is vehicle data provided by vehicles, such as mobile device 104, as they travel the roads throughout a region.

The map database 110 may be a master map database, such as an HD map database, stored in a format that facilitates updates, maintenance, and development. For example, the master map database or data in the master map database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data may be compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by a vehicle represented by mobile device 104, for example. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received map database in a delivery format to produce one or more compiled navigation databases.

As mentioned above, the map data service provider 108 map database 110 may be a master geographic database, but in alternate or complementary embodiments, a client side map database may represent a compiled navigation database that may be used in or with end user devices (e.g., mobile device 104) to provide navigation and/or map-related functions. For example, the map database 110 may be used with the mobile device 104 to provide an end user with navigation features. In such a case, the map database 110 can be downloaded or stored on the end user device which can access the map database 110 through a wireless or wired connection, such as via a processing server 102 and/or the network 112, for example.

In one embodiment, as noted above, the end user device or mobile device 104 can be embodied by the apparatus 20 of Figure 1 and can include an Advanced Driver Assistance System (ADAS) which may include an infotainment in-vehicle system or an in-vehicle navigation system, and/or devices such as a personal navigation device (PND), a portable navigation device, a cellular telephone, a smart phone, a personal digital assistant (PDA), a watch, a camera, a computer, and/or other device that can perform navigation-related functions, such as digital routing and map display. An end user can use the mobile device 104 for navigation and map functions such as guidance and map display, for example, and for determination of useful driver assistance information, according to some example embodiments.

The map database 110 of example embodiments may be generated from a plurality of different sources of data. For example, municipalities or transportation departments may provide map data relating to roadways, while geographic information survey systems may provide information regarding property and ownership of property within a geographic region. Further, data may be received identifying businesses at property locations and information related to the businesses such as hours of operation, services or products provided, contact information for the business, etc. Additional data may be stored in the map database such as traffic information, routing information, etc. This data may supplement the HD map data that provides an accurate depiction of a network of roads in the geographic region in a high level of detail including road geometries, features along the roads such as signs, etc. The data stored in the map database may be gathered from multiple different sources, and one source of data that may help keep the data in the map database fresh is map data provided by vehicles traveling along the road segments of the road network.

While municipalities and businesses may provide map data to a map database, this data may not be up-to-date, may be incomplete, or may be inaccurate. The ubiquity with which vehicles travel along road segments render those vehicles as opportunities to collect data related to the road segments provided the vehicles are equipped with some degree of sensor technology. A vehicle traveling along a road segment with only location sensing technology, such as a Global Navigation Satellite System like GPS, Galileo, etc., may provide data relating to the path of a road segment, while vehicles with more technologically advanced sensors may be able to provide additional information. Sensor data from image sensors or depth sensors such as LiDAR may provide details regarding the features of road segments including the position of signs along the road segment and the information contained on the signs. This data may be crowd sourced by map data service providers 108 to build more robust and reliable maps with a greater level of detail than previously available. Further, beyond building the maps in the map database 110, sensor data may be used to update map data or confirm existing map data to ensure the map database 110 is maintained and as up-to-date as possible. The accuracy and freshness of map data may be critical as vehicles become more advanced and autonomous control of vehicles becomes more ubiquitous as the map database 110 may provide information that facilitates control of a vehicle along a road segment.

Autonomous driving has become a focus of recent technology with recent advances in machine learning, computer vision, and computing power able to conduct real-time mapping and sensing of a vehicle's environment. Such an understanding of the environment enables autonomous driving in two distinct ways. Primarily, real-time sensing of the environment may provide information about potential obstacles, the behavior of others on the roadway, road information/warning signs, and areas that are navigable by the vehicle. An understanding of where other cars are and what they may do is critical for a vehicle (or apparatus 20) to safely plan a route. Further, vehicles must be able to avoid both static and dynamic obstacles, which may change presence and position in real-time. Autonomous vehicles must also have a semantic understanding of what areas are around them that are navigable and safe for driving. Maps, such as HD maps described above, of areas may exist with very high levels of granularity to help facilitate navigation for autonomous vehicles; however, exceptions will occur in which a vehicle may need to deviate from a roadway to avoid a collision or where a road's geometry or other map attributes (e.g., direction) have changed.

Another key to autonomous driving are vision techniques for localization with respect to a map of reference landmarks. This enables the understanding of a position and heading with respect to a roadway. On a coarse scale, navigation maps allow vehicles to know what roads to use to reach a particular destination. On a finer scale, maps allow vehicles to know what lanes to be in and when to make lane changes. This information is essential for planning an efficient and safe route as driving involves complex situations and maneuvers which need to be executed in a timely fashion, and often before they are visually obvious (e.g., a vehicle around a corner is stopped). Localization with respect to a map enables the incorporation of other real-time information into route planning. Such information can include traffic, areas with unsafe driving conditions (e.g., ice, weather, potholes, etc.) and temporary road changes, such as may be caused by construction.

Further, in order to implement full autonomy for a vehicle, the vehicle must be contextually aware in that the vehicle must be aware of the surroundings in terms of both dynamic conditions (e.g., weather, traffic, construction) and static conditions (e.g., road geometry, road signs, barriers, etc.). Embodiments described herein automatically generate and update maps and map features through a machine learning process that generates maps and map features from raw geospatial observations across multiple drives through an environment.

Automatic generation of maps is a difficult task typically solved through a sequential pipeline of discrete algorithmic steps, or in a very specific use case, for example, generating maps from overhead imagery such as satellite images. Automatically generating maps from observational geolocation is also difficult, where observational geolocation data is raw sensor data including observations of objects with one or more geo-positions and possibly other attributes such as category or size. Having a system for this task that can ingest multiple kinds of input geolocation data feeds and produce maps with multiple kinds of geometrical abstractions which can be trained end-to-end simplifies deployment of such a system and enables optimization of its performance across a whole pipeline. Traditional systems divide a process into discrete, separately tuned steps. Embodiments described herein provide a mechanism by which high quality maps are produced automatically from raw geospatial observations.

Embodiments described herein include a feed-forward neural system built of components that can be in whole trained end-to-end. The system of example embodiments includes multiple input heads and multiple output heads, and information is exchanged between these in a shared "body" of the system. This system produces output in the form of features of a map that are accurately located within the mapped environment.

An initial neural operation is a learnable drive alignment that is an amortized, attentional clustering applied to the sensor data in a specific way. An input head that reads in sequences of geospatial observations from discrete drives is structured to be able to learn to align these drives before proceeding further in the computational graph. In a neural network, attention is a technique that approximates cognitive attention of a human. The technical effect focuses attention of the neural network on the most relevant part or parts of the input data, while minimizing the importance of the remaining input data. The input data to the neural network includes data from individual vehicles that have traveled along road segments in a network together with observations from sensor data from these drives. The neural network clustering aligns drives along road segments within a road network.

The output heads use Chamfer loss to produce geolocation abstractions which correspond to map elements. Since this loss is robust to cardinality mismatch, the outputs will be filtered to remove duplicate output elements that in reality depict only a single map element. It is desirable for the loss to be invariant to the cardinality of the entities, such that multiple model output points can represent a single target output point without a loss penalty. This is because in practical conflation cases, it is unknown how many output entities there are, though it is reasonable to assume that there is an upper limit of ground truth entities to predict of based on a predefined number of input points. The Chamfer loss function is well suited to embodiments described herein, and different regularization and auxiliary components can be added to the loss with the performances of different baselines compared with the unmodified Chamfer loss on a test set of data. The modified Chamfer distance formula employed herein is:

$$CD(S_1, S_2) = \frac{1}{|S_1|} \sum_{x \in S_1} \underset{y \in S_2}{min} \|x - y\|_2^2 + \frac{1}{|S_2|} \sum_{x \in S_2} \underset{y \in S_1}{min} \|x - y\|_2^2 \quad (1)$$

$$|S_1| > 0, |S_2| > 0$$

Zero distance between points does not ensure that they correspond to the same object (e.g., the items may not be identical as in the identity of indiscernables) and the triangle inequality does not hold, such that the modified Chamfer distance formula above is a pre-metric. The modified Chamfer distance formula can be characterized as bidirectional mean squared Chamfer distance.

The Chamfer distance has two parts: the precision part and the recall part. Each item in the ground truth set of entities is matched to the closest entity (minimum distance) in the model output, and vice versa, summing the minimum squared differences each way and normalizing by the set sizes. The distance to any set to itself is zero. The modified Chamfer distance is insensitive to cardinalities of points in the data sets, such that several points in the model output can match to a single point in the ground truth. The computational complexity (O(n^2)) is an improvement over the Hungarian loss function that uses one-to-one responsibility matching with a higher complexity (O(n^3)).

The entity-wise distance inside the sums of the modified Chamfer distance formula above can be any distance function, such as Euclidean distance, L2 norm. This model can learn to produce accurate maps for examples of heterogeneous geospatial observations for regions of relatively large size. To scale up the process, the observations can be processed in a tile-by-tile manner to produce corresponding map elements similarly in tile-by-tile output. Map tiles may include sections of a mapped region that are divided into tiles, where the tiles can be of any size that is suitable for the desired use.

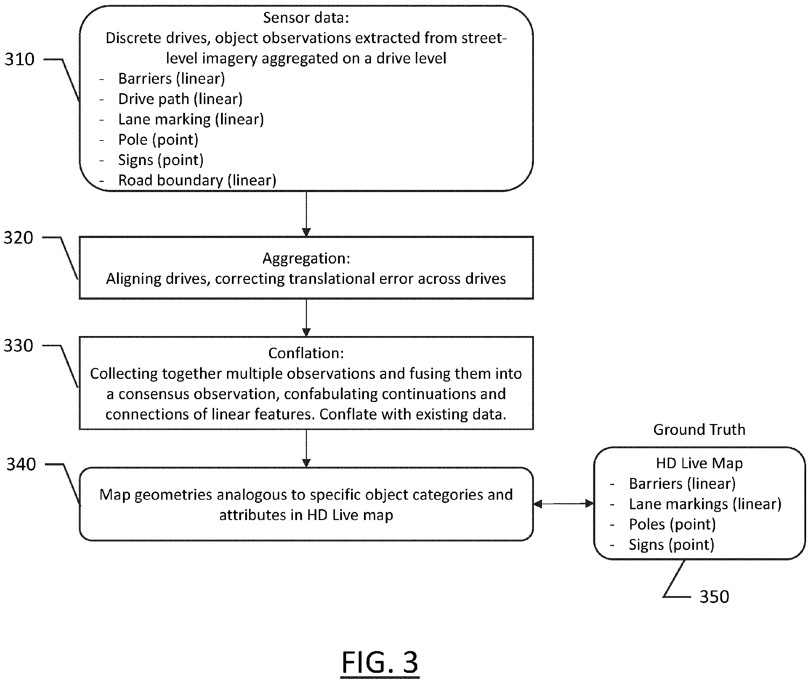

Figure 3 illustrates the use of aggregated drives in map creation, verification, and healing. As shown, sensor data is obtained at 310 from discrete drives with object observations extracted from street level imagery aggregated on a drive level. Such data collection may be collected through a variety of sensor types, such as image sensors or cameras, LiDAR (Light Distancing and Ranging) sensors, sonic sensors, or the like. One example of a camera sensor is a Mobileye™ camera sensor that identifies objects in imagery and uses bounding boxes to identify objects and their relative position along the trajectory of a vehicle. The objects sensed and identified may include linear objects (e.g., barriers, drive paths, lane markings, road boundaries, etc.) and point objects (signs, poles, etc.). Aggregation of the data is performed as shown at 320 including aligning drives and correcting translational error across drives. Conflation occurs at 330 where multiple observations are collected together and fused into a consensus observation, confabulating continuations and connections of linear features which are conflated with existing data. At 340, geometries analogous to specific object categories and attributes are mapped in an HD map. These can be compared against ground truth features 350 from the HD map for verification and healing.

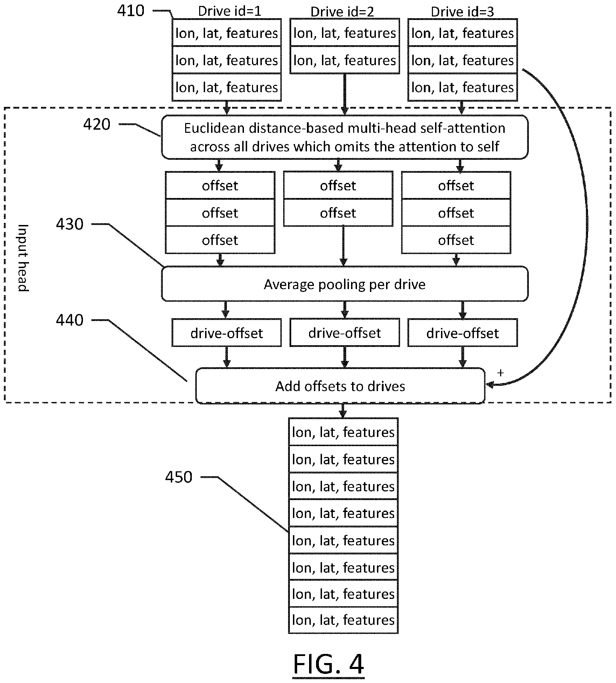

According to an example embodiment of the present invention, an input head reads in observational data as tuples, such as in the form of a drive identifier (a unique number assigned to each drive), longitude, latitude, features, etc. This is illustrated as 410 in Figure 4, where different drives provide one or more observations with at least the longitude, latitude, and features. These geolocations are aligned at 420 to correct for possible systematic translational error which includes a different geolocation offset for each drive in this input, but the same across all of the geolocations for a single drive. This may be implemented as a multi-head self-attentional layer with a distance kernel defined as a Euclidean distance. The Euclidean distance based self-attention across all drives is a modified self-attention layer. Modifications include that the attention weights are not computed with dot product, but are instead computed based on Euclidean distance between the queries and keys:

$$Match\_value = \frac{1.0}{(\varepsilon + \sum_{i \in coordinates}((key_i - query_i) * S)^2)} \quad (2)$$

Where "S" is a scaling factor (e.g., 100) to emphasize distances between the key and query vectors more strongly, and $\varepsilon$ is any numerical small value (e.g., 1e$^{-8}$). The scaling factor value depends on the practicalities of each use case such as the coordinate system and data noise. Embodiments described herein need only a single head for this amortized clustering analog task. The self-attention results are centered on the querying entities using a residual connection:

$$Attention\_outputs = attended\_values - input\_values \quad (3)$$

In attention, each point in the input attends to all close by geolocation input tuples, minus itself. This attention produces a representation for displacement, as it in principle defines a general learnable function which, for each point, can consider its neighborhood in the input data. This displacement representation for each point is averaged for each unique drive identifier (drive id) in the input at 430, and this averaged displacement representation for each drive is added to all the observational geolocations for each drive at 440. Thus, this displacement representation is able to learn to correct for translational displacements and find a consensus between drives using one kind of amortized, learnable clustering.

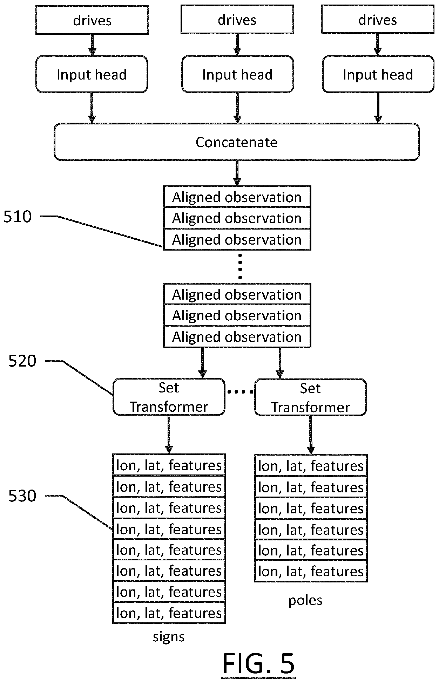

The translated drives are concatenated together and the drive identifiers are dropped at 450. Subsequent layers will obtain drive-aligned observational geospatial representations which can combine with similar drive-aligned observational geolocations from other input heads and produce embeddings which are protected by separate output heads to different kinds of map representations for the generated map. A Set Transformer may be used to learn a function from these aligned drive representations including a set of multiple geospatial entities to different outputs which are again a set of geospatial entities. The Set Transformer is defined in Set Transformer: A framework for Attention-based Permutation-Invariant Neural Networks (Lee, 2019). The Set Transformer is a powerful neural component that is able to learn very complex interactions between unordered sets of entities. Figure 5 illustrates the Set Transformer 520 receiving the output of the input head drive alignment of Figure 4, with the aligned observations 510 stemming from the translated drives that are concatenated together at 450 in Figure 4.

In the structure illustrated in Figure 5, all of the output heads are Set Transformers, which take in sets of entity embeddings and produce their own map geometries from those. One output producing road markings, for example, reads in the representation of the observed reality of objects classified as road markings from previous layers, attends to entities it has learned to be relevant for road markings, and produces estimates for the road markings in the area. Map geometries generated by the Set Transformers include objects, with each Set Transformer generating a specific type of object. For example, embodiments may include Set Transformers for road markings (e.g., lane lines), road signs, road boundaries (e.g., curbs), light poles, and other object classifications relevant to travel along a road segment.

According to an example embodiment, these input and output data sets are batched into sets of multiple region examples of input and corresponding ground truth. Since each example in the batch can vary in the number of geospatial observations it contains, the second dimension in the dataset varies in size, and does not form a well-behaved tensor. For training in batches, embodiments may employ RaggedTensors or a separate mask tensor which designates which inputs and ground truths are valid to pad the second entity dimension to a constant size.

As described above, HD maps may be instrumental in facilitating autonomous vehicle control. Building the HD maps may rely on sensor data received from crowd sourced detectors including image sensors and depth detectors (e.g., LiDAR) from vehicles traveling along the network of roads that is mapped. The sensor data that is received is processed to identify objects and features in the sensor data to properly build and update the HD maps, and to facilitate autonomous control of the vehicle generating the sensed data. Embodiments described herein provide a method for learning to generate maps from raw geospatial observations from such crowd-sourced sensor data from vehicles traveling within an environment.

Autonomous vehicles or vehicles with some level of autonomous controls provide some degree of vehicle control that was previously performed by a person driving a vehicle. Removing some or all of the responsibilities of driving from a person and automating those responsibilities requires a high degree of confidence in performing those responsibilities in a manner at least as good as a human driver. For example, maintaining a vehicle's position within a lane by a human involves steering the vehicle between observed lane markings and determining a lane when lane markings are faint, absent, or not visible due to weather (e.g., heavy rain, snow, bright sunlight, etc.). A vehicle with autonomous capability to keep the vehicle within a lane as it travels along a road segment must also be able to identify the lane based on the lane markings or other features that are observable. As such, the autonomous vehicle must be equipped with sensors sufficient to observe road features, and a controller that is capable of processing the signals from the sensors observing the road features, interpret those signals, and provide vehicle control to maintain the lane position of the vehicle based on the sensor data.

Maintaining lane position is merely one illustrative example of a function of autonomous or semi-autonomous vehicles that demonstrates the sensor level and complexity of autonomous driving. However, autonomous vehicle capabilities, particularly in fully autonomous vehicles, must be capable of performing all driving functions. As such, the vehicles must be equipped with sensor packages that enable the functionality in a safe manner.

Beyond sensors on a vehicle, autonomous and semi-autonomous vehicles may use HD maps to help navigate and to control a vehicle along its path. These HD maps may provide road geometry, lane geometry, road segment restrictions (e.g., speed limits), lane restrictions (e.g., turn-only lanes), and any other information that may be related to the road segments of a road network. Further, HD maps may be dynamic and may receive updates periodically from map services providers which may be informed by vehicles traveling along the road segments with sensor packages able to identify and update the HD maps, in addition to mapping objects and road features that may not previously be known to the HD maps.

According to example embodiments described herein, the role of HD maps in facilitating autonomous or semi-autonomous vehicle control may include crowd-sourced building of the maps to identify and confirm features of the maps and their respective locations. In the context of map-making, the features from the environment may be detected by a vehicle traveling along a road segment and consolidated to form a representation of the actual real-world environment in the form of a map. Embodiments described herein include a method, apparatus, and computer program product to automatically generate maps including map geometries with objects defined therein that may be used as HD maps for autonomous vehicle control and for navigational assistance.

Vehicles traveling along a road segment may be equipped with sensors, such as sensors 21 of apparatus 20 of Figure 1, where the sensors may include image sensors and distance sensors (e.g., LiDAR sensor or other three-dimensional sensor). These sensors may be used to detect features of an environment to facilitate autonomous and semi-autonomous driving. The sensors may be part of a detection module or perception module which may feature a plurality of sensors to obtain a full interpretation of the environment of the module and the vehicle associated therewith.

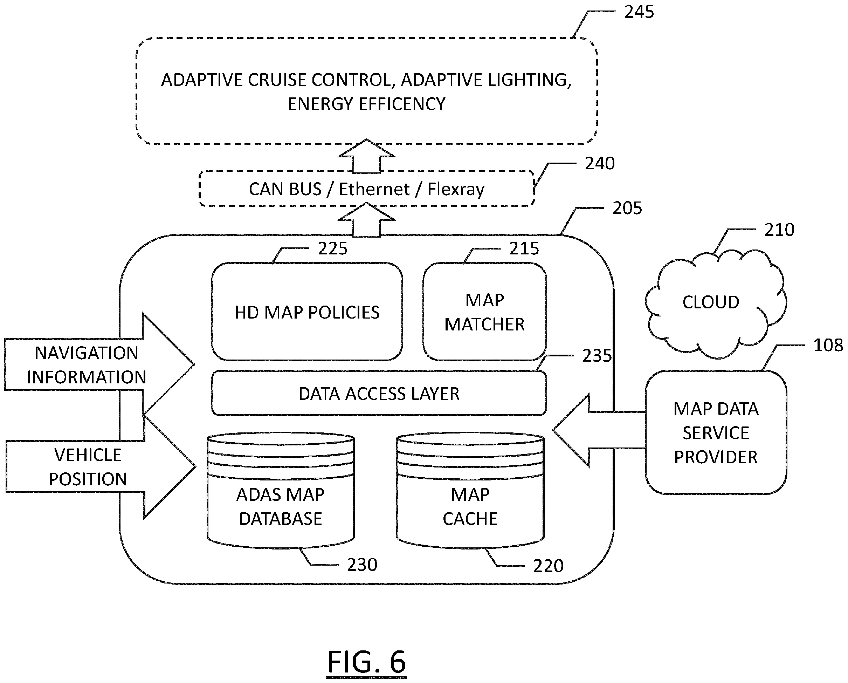

Figure 6 illustrates an example embodiment of architecture specifically configured for implementing embodiments described herein. The illustrated embodiment of Figure 6 may be vehicle-based, where sensor data is obtained from sensors of a vehicle traveling along a road segment. The location of the collected sensor data along the road segment may be determined through location determination using GPS or other positioning means and correlated to map data of map data service provider 108. As illustrated, the architecture includes a map data service provider 108 that provides map data (e.g., HD maps and policies associated with road links within the map) to the Advanced Driver Assistance System (ADAS) 205, which may be vehicle-based or server based depending upon the application. The map data service provider may be a cloud-based 210 service. The ADAS receives navigation information and vehicle position and may use that information to map-match 215 the position to a road link on a map of the mapped network of roads stored in the map cache 220. This link or segment, along with the direction of travel, may be used to establish which HD map policies are applicable to the vehicle associated with the ADAS, including sensor capability information, autonomous functionality information, etc. Accordingly, policies for the vehicle are established based on the current location and the environmental conditions (e.g., traffic, time of day, weather). The HD map policies associated with the road segment specific to the vehicle are provided to the vehicle control, such as via the CAN (computer area network) BUS (or Ethernet or Flexray) 240 to the electronic control unit (ECU) 245 of the vehicle to implement HD map policies, such as various forms of autonomous or assisted driving, or navigation assistance.

A vehicle traveling along a road segment may receive sensor data from a plurality of sensors used to capture data relating to the surrounding environment, such as the position of an object (e.g., a sign, pole, lane markings, road barriers, etc.) relative to a vehicle and the road segment. These geospatial observations may be generated along discrete trajectories that are aligned and used to definitively identify the geo-location of objects within a map database. The automatic building and updating of map geometries as described herein can produce accurate HD maps with great efficiency.

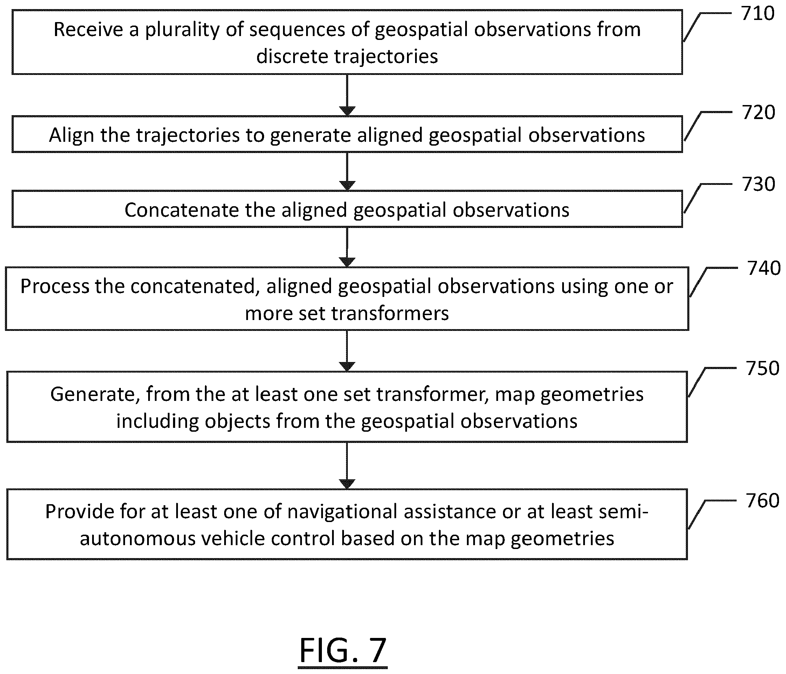

Figure 7 illustrates a flowchart depicting a method according to an example embodiment of the present invention. It will be understood that each block of the flowcharts and combination of blocks in the flowcharts may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory device 26 of an apparatus employing an embodiment of the present invention and executed by a processor 24 of the apparatus 20. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructi ons.

Figure 7 is a flowchart of a method for learning to generate maps from raw geospatial observations from sensors traveling within an environment. As shown, at 710 a plurality of sequences of geospatial observations from discrete trajectories are received. The trajectories are aligned at 720 to generate aligned geospatial observations. The aligned geospatial observations are concatenated at 730. The concatenated, aligned geospatial observations are processed at 740 using one or more Set Transformers. At 750, map geometries including objects from the geospatial observations are generated from the at least one Set Transformer. Navigational assistance or at least semi-autonomous vehicle control is facilitated based on the map geometries at 760.

In an example embodiment, an apparatus for performing the method of Figure 7 above may comprise a processor (e.g., the processor 24) configured to perform some or each of the operations (710-760) described above. The processor may, for example, be configured to perform the operations (710-760) by performing hardware implemented logical functions, executing stored instructions, or executing algorithms for performing each of the operations. Alternatively, the apparatus may comprise means for performing each of the operations described above. In this regard, according to an example embodiment, examples of means for performing operations 710-760 may comprise, for example, the processor 24 and/or a device or circuit for executing instructions or executing an algorithm for processing information as described above.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

**Claims**

1. An apparatus comprising at least one processor and at least one non-transitory memory including computer program code instructions, the computer program code instructions configured to, when executed, cause the apparatus to at least:

   receive a plurality of sequences of geospatial observations from discrete trajectories;
   align the trajectories to generate aligned geospatial observations;
   concatenate the aligned geospatial observations;
   process the concatenated, aligned geospatial observations using one or more Set Transformers;
   generate, from the at least one Set Transformer, map geometries including objects from the geospatial observations; and
   provide for at least one of navigational assistance or at least semi-autonomous vehicle control based on the map geometries.

2. The apparatus of claim 1, wherein causing the apparatus to align the trajectories comprises causing the apparatus to apply a geospatial offset for one or more of the trajectories.

3. The apparatus of claim 1, wherein causing the apparatus to align the trajectories comprises causing the apparatus to apply a multi-head self-attentional layer with a distance kernel defined as a Euclidean distance to the trajectories to generate offsets for the trajectories in order to align the trajectories.

4. The apparatus of claim 1, wherein the plurality of sequences of geospatial observations from discrete trajectories include unique trajectory identifiers for each trajectory, wherein causing the apparatus to concatenate the aligned geospatial observations comprises causing the apparatus to remove the unique trajectory identifiers associated with the geospatial observations.

5. The apparatus of claim 1, wherein causing the apparatus to align the trajectories to generate aligned geospatial observations comprises causing the apparatus to:

   apply a machine learning model to the geospatial observations of the sequences of geospatial observations for the discrete trajectories;
   determine, from the machine learning model, a displacement for each of the geospatial observations;
   average, for each discrete trajectory, the displacement for each of the geospatial observations in the respective discrete trajectory to generate an average displacement for each discrete trajectory; and

apply the average displacement for each discrete trajectory to the respective discrete trajectory to align the discrete trajectories.

6. The apparatus of claim 1, wherein the objects from the geospatial observations included in the map geometries comprise point objects and linear objects, wherein point objects comprise signs and poles, and wherein linear objects comprise road markings and road boundaries.

7. The apparatus of claim 6, wherein the objects from the geospatial observations are used to facilitate autonomous vehicle control.

8. The apparatus of claim 1, wherein the map geometries including objects from the geospatial observations are model outputs, wherein the apparatus is further caused to compute a loss for the model outputs for backpropagation-based model parameter training using a Chamfer loss function.

9. The apparatus of claim 8, wherein the apparatus is further caused to remove duplicate output objects using clustering or domain-specific heuristics.

10. A computer program product comprising program code instructions to:

receive a plurality of sequences of geospatial observations from discrete trajectories;
align the trajectories to generate aligned geospatial observations;
concatenate the aligned geospatial observations;
process the concatenated, aligned geospatial observations using one or more Set Transformers;
generate, from the at least one Set Transformer, map geometries including objects from the geospatial observations; and
provide for at least one of navigational assistance or at least semi-autonomous vehicle control based on the map geometries.

11. The computer program product of claim 10, wherein the program code instructions to align the trajectories comprise program code instructions to apply a geospatial offset for one or more of the trajectories.

12. The computer program product of claim 10, wherein the program code instructions to align the trajectories comprise program code instructions to apply a multi-head self-attentional layer with a distance kernel defined as a Euclidean distance to the trajectories to generate offsets for the trajectories in order to align the trajectories.

13. The computer program product of claim 10, wherein the plurality of sequences of geospatial observations from discrete trajectories include unique trajectory identifiers for each trajectory, wherein the program code instructions to concatenate the aligned geospatial observations comprise program code instructions to remove the unique trajectory identifiers associated with the geospatial observations.

14. The computer program product of claim 10, wherein the program code instructions to align the trajectories to generate aligned geospatial observations comprise program code instructions to:

apply a machine learning model to the geospatial observations of the sequences of geospatial observations for the discrete trajectories;
determine, from the machine learning model, a displacement for each of the geospatial observations;
average, for each discrete trajectory, the displacement for each of the geospatial observations in the respective discrete trajectory to generate an average displacement for each discrete trajectory; and
apply the average displacement for each discrete trajectory to the respective discrete trajectory to align the discrete trajectories.

15. A method comprising:

receiving a plurality of sequences of geospatial observations from discrete trajectories;
aligning the trajectories to generate aligned geospatial observations;
concatenating the aligned geospatial observations;
processing the concatenated, aligned geospatial observations using one or more Set Transformers;
generating, from the at least one Set Transformer, map geometries including objects from the geospatial observations; and

providing for at least one of navigational assistance or at least semi-autonomous vehicle control based on the map geometries.

APPARATUS 20

SENSOR(S) — 21

COMMUNICATIONS INTERFACE — 22

PROCESSOR — 24

USER INTERFACE — 28

MEMORY — 26

FIG. 1

MAP DATA SERVICE PROVIDER / CLOUD — 108

MAP DATABASE — 110

PROCESSING SERVER — 102

MOBILE DEVICE — 104

NETWORK — 112

FIG. 2

EP 4 148 389 A2

EP 4 148 389 A2

**310** — Sensor data:
Discrete drives, object observations extracted from street-level imagery aggregated on a drive level
- Barriers (linear)
- Drive path (linear)
- Lane marking (linear)
- Pole (point)
- Signs (point)
- Road boundary (linear)

**320** — Aggregation:
Aligning drives, correcting translational error across drives

**330** — Conflation:
Collecting together multiple observations and fusing them into a consensus observation, confabulating continuations and connections of linear features. Conflate with existing data.

Ground Truth

**340** — Map geometries analogous to specific object categories and attributes in HD Live map

HD Live Map
- Barriers (linear)
- Lane markings (linear)
- Poles (point)
- Signs (point)

**350**

## FIG. 3

FIG. 4

```
┌─────────┐      ┌─────────┐      ┌─────────┐
│ drives  │      │ drives  │      │ drives  │
└────┬────┘      └────┬────┘      └────┬────┘
     │                │                │
     ▼                ▼                ▼
┌─────────┐      ┌─────────┐      ┌─────────┐
│Input head│     │Input head│     │Input head│
└────┬────┘      └────┬────┘      └────┬────┘
     │                │                │
     ▼                ▼                ▼
┌──────────────────────────────────────────┐
│              Concatenate                  │
└─────────────────────┬────────────────────┘
                      │
                      ▼
        ┌──────────────────────────┐
        │   Aligned observation    │
        │   Aligned observation    │
        │   Aligned observation    │
        └──────────────────────────┘
                   ⋮
        ┌──────────────────────────┐
        │   Aligned observation    │
        │   Aligned observation    │
        │   Aligned observation    │
        └──────────────────────────┘
```

510

520

530

```
          ┌─────────┐        ┌─────────┐
          │   Set   │ ● ● ● ● │   Set   │
          │Transformer│      │Transformer│
          └────┬────┘        └────┬────┘
               │                  │
               ▼                  ▼
     ┌──────────────────┐  ┌──────────────────┐
     │ lon, lat, features│ │ lon, lat, features│
     │ lon, lat, features│ │ lon, lat, features│
     │ lon, lat, features│ │ lon, lat, features│
     │ lon, lat, features│ │ lon, lat, features│
     │ lon, lat, features│ │ lon, lat, features│
     │ lon, lat, features│ │ lon, lat, features│
     │ lon, lat, features│ └──────────────────┘
     │ lon, lat, features│        poles
     └──────────────────┘
             signs
```

## FIG. 5

FIG. 6

EP 4 148 389 A2

EP 4 148 389 A2

```
┌────────────────────────────────────────────────────────┐
│  Receive a plurality of sequences of geospatial          │── 710
│  observations from discrete trajectories                 │
└────────────────────────────────────────────────────────┘
                         │
                         ▼
┌────────────────────────────────────────────────────────┐
│  Align the trajectories to generate aligned geospatial   │── 720
│  observations                                            │
└────────────────────────────────────────────────────────┘
                         │
                         ▼
┌────────────────────────────────────────────────────────┐
│  Concatenate the aligned geospatial observations         │── 730
└────────────────────────────────────────────────────────┘
                         │
                         ▼
┌────────────────────────────────────────────────────────┐
│  Process the concatenated, aligned geospatial            │── 740
│  observations using one or more set transformers         │
└────────────────────────────────────────────────────────┘
                         │
                         ▼
┌────────────────────────────────────────────────────────┐
│  Generate, from the at least one set transformer, map    │── 750
│  geometries including objects from the geospatial        │
│  observations                                            │
└────────────────────────────────────────────────────────┘
                         │
                         ▼
┌────────────────────────────────────────────────────────┐
│  Provide for at least one of navigational assistance or  │── 760
│  at least semi-autonomous vehicle control based on the   │
│  map geometries                                          │
└────────────────────────────────────────────────────────┘
```

<u>FIG. 7</u>

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Set Transformer: A framework for Attention-based Permutation-Invariant Neural Networks,* 2019